# EUROPEAN PATENT APPLICATION

(11) **EP 4 460 150 A1**
(43) Date of publication of application: **06.11.2024**
(21) Application number: 23382415.0
(22) Date of filing: 05.05.2023
(51) Int. Cl.: H04W 88/16

(54) **DISTRIBUTED INTERMEDIATE CONTROL NODE (GATEWAY) WITH IOT AND AI CAPABILITY, INTEGRATED IN A MULTIPLAY TELECOMMUNICATION SYSTEM AND APPLIED TO SMALL CELLS IN 4G AND 5G MOBILE NETWORKS**

(71) Applicant: Wifo Networks, S.L., 46183 Valencia (ES)
(72) Inventor: SANCHIS BAUTISTA, JOSE ANTONIO, 46015 Valencia (ES)
(74) Representative: Fernández-Pacheco, Aurelio Fernández

(57) **Abstract**

A distributed IoT and AI enabled intermediate control node (Gateway) integrated in a multiplay telecommunication system applied to small cell in 4 and 5G mobile networks, which this patent proposes, manages and coordinates in an intermediate equipment located between the telephone operator(s), the transmission of multiplay communications that synchronously and coincidentally carry voice, data, video and radio frequency for mobile telephony, over a GPON (Gigabit Passive Optical Network) FTTH (Fibre-To-The-Home) or FTTx (Fibre To The Block) fibre optic network, using an electrical to optical converter that channels the signal through the fibre to a Metrocell (FTTx) or a Femtocell (FTTH) with a single client/user side modem remotely controlled by a system compatibility and remote access control management software which, in turn, allows independent management of mobile telephony services, Ethernet services (voice, data, video) of the GPON network, operating with 5G mobile network frequency above 3 GHz and with WtFt 6 capability, according to IEEE 802.11ax (loT) and with artificial intelligence (AI) processing software.

## Description

### PURPOSE OF THE INVENTION

Intermediate control node (Gateway) distributed with IoT and AI enabled, integrated in a multiplay telecommunication system applied to small cell in 4 and 5G mobile networks, which this patent proposes, manages and coordinates, in an intermediate equipment located between the mobile operators, the transmission of multiplay communications carrying synchronous and coincident voice, data, video and radio frequency for mobile telephony, over a GPON (Gigabit Passive Optical Network) FTTH (Fibre-To-The-Home) or FTTx (Fibre To The Block) optical fibre network, using an electrical to optical converter that channels the signal through the fibre to a Metrocell (FTTx) or a Femtocell (FTTH) with a single client/user side modem remotely controlled by a system compatibility and remote access control management software which, in turn, allows independent management of mobile telephony services, Ethernet services (voice, data, video) of the GPON network, operation with 5G mobile network frequency above 3 GHz and with WIFI 6 capability, according to IEEE 802.11ax (loT) and with artificial intelligence (Al) processing software.

### FIELD OF APPLICATION OF THE INVENTION

The present invention has its application in the telecommunications industry and in particular in broadband access installations over fixed fibre optic FTTx (Fibre To The Customer) networks and in LTE (Long Term Evolution), 4G and 5G mobile networks

### BACKGROUND TO THE STATE OF THE ART

Mobile communications are mainly constituted by geographically distributed base stations, dedicated to providing voice and data services in a certain zone, covering a limited surface area. The coverage areas are divided into hexagonal spaces called cells, assigning one base station per coverage cell with variable ranges and powers depending on the frequencies of the cellular network in question (GSM/3G/LTE). This configuration allows the most efficient use of the frequency spectrum and therefore allows the connection of many users at the same time.

During a communication, the user connects via the nearest base station, which in turn is connected to the other cells and telephone systems (mobile or fixed). This ensures communication on the move, i.e. when the user is on the move and passes through different coverage cells.

A base station is made up of different equipment that together constitutes part of a mobile cellular telecommunications system and is composed of shelters or containers to house the equipment necessary for the establishment of telecommunications and high power towers (radio signal re-emitters), as well as high altitude structures in accordance with the radio demand studies of each geographical area.

The increase in demand for high-speed data services has led to the creation of new technologies and standards in mobile networks in such a way that they have significantly increased their speed in order to meet the demand for these new services (E.g.: Mobile TV).

Telecommunications operators currently offer services supported by radio signals that have to be distributed to users via broadband radio interfaces of mobile networks such as UMTS (third generation technology for voice and data transmission), HSPA (mobile internet standard) or LTE (Long Term Evolution).

The growth in demand for more and better voice and data services on mobile networks presents the following challenges:
- Increase in radio spectrum, limited by current legislation.
- Compatibility of operators for reception and reading of signal.
- Increasing the number of cells through subdivisions of the original cell requires more infrastructure, thereby increasing costs.
- Technology change from 3G/4G/5G or LTE Advance origin.

In the state of the art, fibre-to-the-home distribution technology exists, as does the use of radio over optical fibre, and there are numerous methods and devices for the installation of fibre-optic access networks called GPON (Gigabit Passive Optical Network), FTTH (Fibre-To-The-Home), or mobile telecommunications services using LTE (Long Term Evolution) technology.

A GPON (Gigabit Passive Optical Network) FTTH (Fibre-To-The-Home) network is a passive optical network that uses a passive optical splitter to provide and connect multiple services between many customers of a telecommunications operator, i.e. it connects the node of a telecommunications operator from an equipment called OLT (Optical Line Terminal) with different users, according to ITU T 984, by means of an ONT (Optical Network Terminal) modem in each one by means of which it provides multiple services called triple play (voice, data and video)

Implementation through a GPON residential optical fibre network (Gigabit Passive Optical Network) is not known in the state of the art to simultaneously include, in addition to the common multiplay services (voice, data, video), the RF signal for LTE mobile telephony with WIFI 6 capacity according to IEEE 802.11ax (IoT) and with artificial intelligence (Al) processing software through a single client side modem and an intermediate control node (Gateway), so that the user will receive their mobile signal (3G, 4G, 5G) via their home modem (without the need for base or antenna stations), obtaining a dual connection with the modem via WIFI and the telephone signal (3G/4G/5G) from any operator through the intermediate node compatible with various operators; in short, the GPON (Gigabit Passive Optical Network) services, FFTH (Fibre-To-The-Home) + LTE (Long Term Evolution).

### DESCRIPTION OF THE INVENTION

### NOMENCLATURE USED

| | |
|---|---|
| 3GPP | 3rd Generation Partnership Project |
| -BSS: | Basic service package |
| - BSSID: | Basic service set identifier |
| -CONTAINER: | A virtual container is the basic element of an SDH signal. It consists of the information bits of a PDH signal which will be packed inside the container. There are different types of containers, each corresponding to a PDH signal of different transmission rates. |
| -EPC: | It is an IP-based multiple access network core |
| -ESS: | Extended set |
| -ESSID | Extended set identifier |
| -STN: | Computer Station |
| -FEMTOCELL: | It is a small in size and power base station, designed for home or business use. 40 m range approx. |
| -FTTH: | Fibre-To-The-Home |
| -FTTX: | Fibre to the X (Fibre To The Block/Gateway/Customer, etc.) |
| -GPON: | Gigabit Passive Optical Network |
| -HSPA: | High Speed Packet Access (mobile internet standard as defined in 3GPP Release 7 and later) |
| -AI: | Artificial intelligence |
| -IBSS: | Stand-alone basic service package |
| -IOT: | Internet of Things |
| -ITU G 984: | Regulations of the International Telegraph Union based in Geneva (Switzerland) |
| -LTE: | Long Term Evolution |
| -LTE-A: | (ADVANCE) Advanced Long Term Evolution |
| -MDU: | Multiple Dwelling units |
| -METROCELL: | It is a medium sized, medium power base station, designed for street use, with a range of approx. 150m. |
| -NGN: | Next Generation Network |
| -NGN: | Next Generation Networking |
| -ODN: | Optical Distribution Network |
| -OLT: | Optical Line Terminal |
| -ONP: | Optical Network Planner |
| -ONT: | stands for Optical Network Terminal |
| -UN: | Optical Network Unit |
| -PDN | Packet Data Network |
| -SD: | Connection called distribution system |
| - SMALL CELLS | small cells are intermediate mobile access nodes |
| -T-CONT: | An object supporting traffic within an ONU / ONT unit that represents a group of logical connections, and is treated as a single entity for bandwidth allocation purposes . |
| -TRANSPARENCY: | IPV6 format (The transition between IPv6 providers is transparent to end-users with the renumbering mechanism). |
| -UE | User Equipment |
| -UMTS: | Universal Mobile Telecommunication System (third-generation technology for voice and data transmission) |

The architecture of the telecommunications services called GPON FTTH according to ITU-T 984 essentially consists of the following elements:
- Optical Line Terminal (OLT) equipment employing active type elements (hardware), which are located at the telecommunications company's node or exchange.
- ODN passive optical network deployed in the Outside Plant between the OLT and the far end customer terminal, full duplex and the services sent from the node to the customer separated by their wavelength of light circulating in a single fibre strand until reaching the splitter (splitter box is an electronic interconnection device used in audio jacks to separate several identical audio channels from a single source) which is also passive and this optical device divides single power into multiple outputs (e.g. one input with 8/16/32 optical outputs).
- The optical network terminal (ONT equipment), where the optical distribution network (ODN) terminates, reaches the customer's home to guide the optical signal traffic to the user and back to the central office using a different wavelength (uplink and downlink with different frequency optical carriers), according to ITU-T standard. G984.2 This Fibre-To-The-Home network terminal equipment has an optical input according to the above standard and two or more Ethernet 802.11 standard outputs either physically by cable via a mechanical RJ45 connector or intangible with the same standard, via a radio wave which have the same effect: to create in the modem an Ethernet data connection point according to IEEE standard 802 to the optical network.

The telecommunications system proposed by the present invention consists of two essential elements:
- An intermediate distributed control Node (Gateway)
- A multiplay telecommunication system with IoT and AI capability

The system provides a fixed residential network to support simultaneously through the GPON FTTH network (Gigabit Passive Optical Network to Homes) voice, data, video and mobile radio frequency services and also with WIFI 6 capability, according to IEEE 802.11ax (IoT) and with artificial intelligence (Al) processing software, by implementing the mobile network, i.e. a simultaneous distribution of baseband and radio frequency signals provided by a radio access node through the use of a single ONT modem, without generating changes in the infrastructure that employs a GPON FTTH network.

The term overlapping refers to the fact that each Optical Fibre Network Terminal (ONT) can simultaneously support digital Ethernet traffic and mobile broadcast radio signals.

Likewise, for the description we will mainly use the topology of the FTTH GPON networks (physical or logical map of a network to exchange data), within the telecommunication services in an illustrative and non-limiting way to specifically explain what the present invention proposes.

Mobile radio frequency signal networks, as mentioned above, currently have internal radio coverage problems in buildings or homes that result in reduced data rates for customers located in radio shadow areas, even under conditions of high radio frequency power radiation to minimise the problems caused by excessive distance or intermediary obstacles. This situation is due to the very configuration of the communications system which uses radio signal repeaters or re-emitters in different circumstances and which is made up of a system of nearby (base stations) and/or remote repeaters and the terminals themselves, where it should be noted that the frequency bands assigned to each leg of the communication are different in order to avoid mutual interference between transmitting and receiving antennas in the repeaters.

This procedure incorporates and develops:

### 1.-AT LEAST ONE DISTRIBUTED CONTROL NODE (GATEWAY)

Basically it is an intermediate control unit that manages the interconnection, mobility and coordination of the different operators with the nodes of the multiplay networks, and also provides the network functions that are necessary to supply the set of multiplay networks with the desired functional characteristics at a high speed of accessibility (real time, equal or less than 10 msec) This equipment is usually located at the operator's premises and could be on the client side (a hospital) covering a private multiplay network

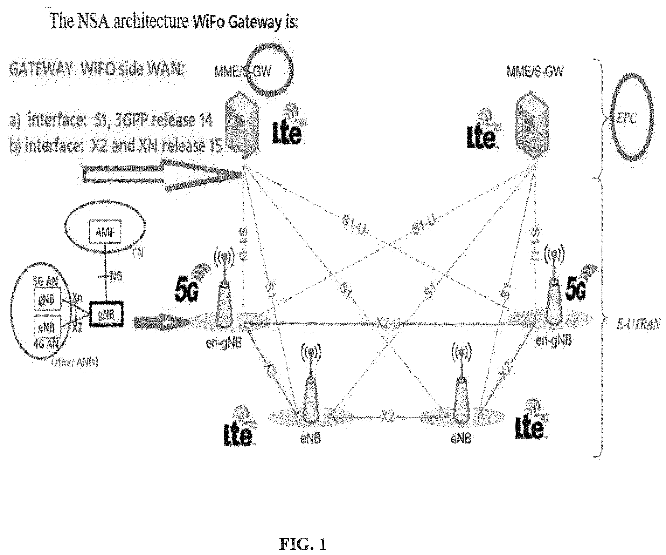

The control node (Gateway) of the packet data network (PDN) is a critical network function for the 5G mobile core network, known as the evolved packet core (EPC), and is required to group and manage multiple small cell (multiplay networks) together. The control node acts as an interface between the 3GPP2 Long Term Evolution-System Architecture Evolution (LTE-SAE) network and other packet data networks, such as the Internet, SIP-based IP Multimedia Subsystem (IMS) networks and high-speed evolved networks. Wireless packet data networks (eHRPD). **(****FIG. 1****)**

The control node (Gateway) with IoT and AI capability proposed in the present invention is the node that terminates the interface that receives the signal from the intermediate mobile access nodes (small cell) over a GPON access network, as a transport network and to the optical line terminal (OLT side node) of the OLT's UP LINK port, receives this signal and routes and/or transforms it into the mobile network protocol according to 3GPP in interface SI/S2 or X1/X2, or according to 4G or 5G mobile networks,

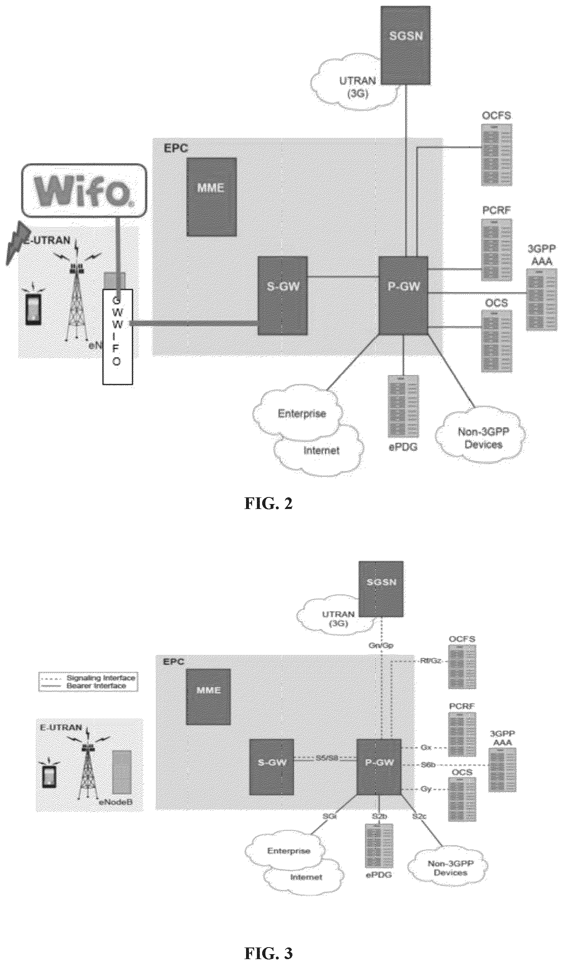

The control node (Gateway) provides connectivity to the UE (User Equipment) to external packet data networks by being the exit and entry point of traffic for the UE. A UE can simultaneously have connectivity to more than one control node (Gateway) to access multiple packet data nodes (PDNs). This proposed control node simultaneously performs policy enforcement, packet filtering for each user, charging support, lawful interception and packet detection, as well as acting as an anchor for mobility between 3GPP and non-3GPP technologies, such as WiMAX and 3GPP2 (CDMA 1X and EvDO). **(****FIG. 2****)**

### The control node (Gateway) functions include:

- Support for mobility between 3GPP access systems and non-3GPP access systems. This is sometimes referred to as the SAE Anchor function. Very important to ensure compatibility between equipment.
- Application of operator policies (permit and tariff enforcement)
- Per-user packet filtering (Deep Packet Inspection) for traffic discrimination including security filters.
- Support and load balancing between units (small cell) of the multiplay networks interconnected at the control node (Gateway).
- Lawful interception accessible from the control node (Gateway) and not from the nodes (small cell) of multiplay networks.
- UE IP address assignment and VLAN configuration for interaction between the operator's network and the nodes (small cell) of the multiplay networks linked to the control node (Gateway).
- Packet selection to prevent IP network intrusions.
- Downlink transport level packet marking (traffic discrimination and associated software);
- Application of downlink rate based on Aggregate Maximum Bit Rate (AMBR); i.e. dynamic management of available bandwidth.
- Configuration interface between the operator's nodes (the core of its network), the control node (Gateway) and the communication structure between the control node (Gateway) and nodes (small cell) of the multiplay networks through dedicated software integrated and embedded in the design of the small control node (Gateway). Communications between each small cell node of the multiplay networks and the Gateway control node, as well as the exchange of communications (X2) between small cell nodes of the multiplay networks through the control node (Gateway) shall be configured from the control node (Gateway).

The following are additional control node (Gateway) functions when non-3GPP access (eHRPD) is supported:
- control node (Gateway) includes the Local Mobility Anchor (LMA) function, if PMIP-based S5 or S8 is used.
- control node (Gateway) includes the function of a DSMIPv6 Home Agent, if S2c is used.

The control node (Gateway) integrates Artificial Intelligence (Al). The proposed smart radio technology increases the quality of the wireless signal while our artificial intelligence management system manages to execute actions with less network delay when performed in close proximity to the customer.

The smart antenna technology is maintained and offers an «adaptive» wireless signal with increased signal strength and focus, which extends the coverage area by 20 percent. Because fewer APs are required, the cost of deployment is reduced by 20 percent, making Wi-Fi 6 the best choice for high-end enterprise and campus wireless office environments.

The use of Artificial Intelligence reduces network latency by up to 10 milliseconds, which is 50 percent lower than the latency of standard Wi-Fi networks. This works particularly well with Wi-Fi 6 augmented reality (AR) and virtual reality (VR) applications, and with other latency-sensitive applications, helping to avoid the increased B.E.R. (Bit Error Rate) that causes lag.

-WIFI with Artificial Intelligence and loT (Openness) With a solid foundation in mobile networks, WIFO's Wi-Fi 6 provides lossless roaming technologies between APs to ensure loss-free data transmission of packets, even when there are automated guided vehicles (AGVs) between large campuses. The combination of Wi-Fi 6 with loT.

### 2.-A MULTIPLAY COMMUNICATION SYSTEM

Implementation through a residential GPON fibre optic network (Gigabit Passive Optical Network), to include, in addition to the common multiplay services (voice, data, video) the radio frequency signal for LTE mobile telephony simultaneously with WIFI 6 capability, according to IEEE, 802.11ax (IoT) and with artificial intelligence (AI) processing software via a single client-side modem and an intermediate gateway, so that the user will receive the mobile signal (3G, 4G, 5G) via their home modem (without the need for base stations or antennas), obtaining a dual connection with the modem via WiFi and the telephone signal (3G/4G/5G) of any operator through the intermediate node that is compatible with different operators. The multiplay communication system is composed of
- a single client-side modem.
- The antenna plus radio equipment over the residential GPON fibre optic network is housed in the same modem.
- Radio frequency emission sources at each client side point (ONT modem) of very low power, which can ensure reception/emission speed and constant quality and/or coverage of communications.
- Individual multiple connections that reduce the concentration of traffic on mobile network antennas and avoid the problems mentioned in the previous paragraph.
- The management of the mobile technology is independent of the GPON FTTH network.
- Creation of an electromagnetic radiating point of LTE / LTE-A / 3G / 4G / 5G radio signals at each GPON residential customer terminal.
- Transformation of FTTH residential fixed networks and FTTx street or block networks into mobile networks.
- WIFI 6, according to IEEE, 802.11ax (loT) and
- Artificial intelligence (Al) processing software

As noted, the present invention carries the radio frequency signal through the optical fibre creating a point of electromagnetic irradiation of LTE / LTE-A / 3G / 4G / 5G radio signals at each residential customer terminal, thereby transforming the optical signal from the fixed FTTH / FTTx networks into a radio frequency signal for mobile networks, thus converging fixed and mobile network transmissions over a fibre optic network, which was originally done by installing separate networks and terminal equipment.

The antenna, plus the LTE / LTE-A / 3G / 4G / 5G radio equipment over residential GPON network is housed in the same modem that enables the provision of the GPON FTTH / FTTx service and its size is not larger than 150x30x60 mm.

This equipment and procedure solves the above-mentioned challenges and problems by providing wide coverage and increased capacity through multiple transmission points over the fixed fibre optic network at very low cost and with very low levels of indoor/outdoor electromagnetic radiation compared to the antennas currently used by base stations. This greatly supports the expansion, deployment and planning of LTE / LTE-A / 3G / 4G / 5G mobile broadband network services to a larger population.

The installation of this multiplay equipment ensures:
- Optimal indoor signal-to-noise ratio of 3G/4G/5G radio frequency signals
- Maximum mobile speed and quality of service
- Minimum RF power
- Complements mobile signal towers of high height and high power.
- (Al) achieves local processing of software and thus reduces order execution times, which is key for electro-mobility or medicine, for example
- Reduces network latency by up to 10 milliseconds, which is 50 percent lower than standard Wi-Fi network latency

It should also be noted that its small size means that it can be installed in the street on street furniture. The equipment provides fixed and mobile network telecommunications operators with the option to jointly offer, through the installation of a single customer-side modem, voice, data, video and radio frequency services for mobile telephony as well as a independent technical mobile telephony management from the fixed GPON fibre network.

This installation favours the provision of multiservices with excellent indoor coverage by operators to their customers, providing them with higher quality, thus favouring mobile network deployments and reducing the cost of installations, equipment, components and those associated with their maintenance (CAPEX and OPEX).

By distributing antennas on each client-side modem, the reduction in transmission/reception speed, quality and coverage of communications is resolved in accordance with the current radio propagation model of the mobile signal, which is produced by parameters such as the distances between terminals and repeaters (antennas), times when traffic is most concentrated, terrain orography and other physical obstacles in the architecture of buildings and homes.

### DESCRIPTION OF THE DRAWINGS

In order to complement the description being implemented, and to facilitate a better and easier understanding of the characteristics of the invention and its practical applications, this description is accompanied by a set of diagrams which, by way of illustration and without limitation, represent the following:

### Figures and/or Diagrams of the invention:

Figure 1.- Technology upgrade map of new 5G network interfaces
Figure 2.- GATEWAY in the Basic E-UTRAN/EPC Network and eHRPD
Figure 3 Supported GATEWAY interfaces on the RedE-UTRAN/EPC

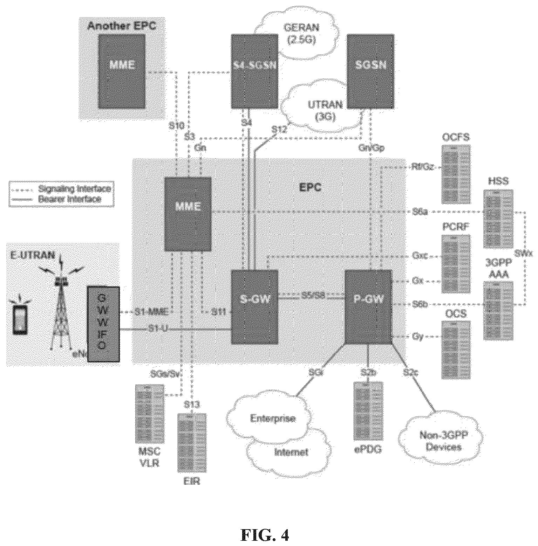

Figure 4 GATEWAY in the E-UTRAN/EPC Network

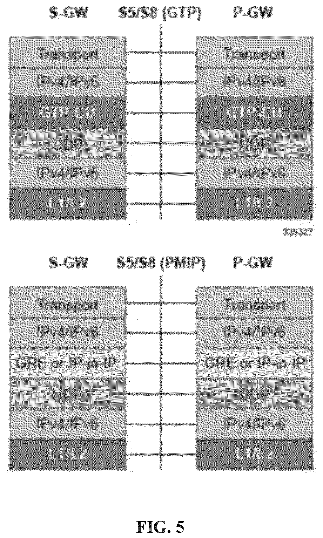

Figure 5.- GATEWAY stack of supported protocols

### PREFERRED IMPLEMENTATION OF THE INVENTION

**THE CONTROL NODE (GATEWAY) WITH IOT AND AI CAPABILITY** proposed in the present invention is the terminating node of the interface.

### Supported logical network interfaces (reference points)

The control node (Gateway) provides the following logical network interfaces in support of the E-UTRAN/EPC network:
**S2b interface:** The S2b interface reference point defined between the unreliable non-3GPP ePDG (Evolved Packet Data Gateway) and the control node (Gateway) uses PMIPv6 (Proxy Mobile IP version 6) to provide access to the EPC. GTPv2-C is the signalling protocol used in S2b. The S2b interface is based on 3GPP TS 29.274.

S5/S8 interface: This reference point provides tunnelling and management between the S-GW and the control node (Gateway), as defined in 3GPP TS 23.401 and TS 23.402. The S8 interface is an inter-PLMN reference point between the S-GW and the control node (Gateway) used during roaming scenarios. The S5 interface is used between an S-GW and a control node (Gateway) located within the same administrative domain (without roaming).

Used for S-GW relocation due to UE mobility and if the S-GW needs to connect to an unplaced Gateway for the required PDN connectivity

Supported protocols:
- Transport layer: UDP, TCP
- Tunnelling:
   GTP: GTPv2-C (signalling channel), GTPv1-U (bearer channel) PMIPv6: GRE or IP-in-IP

- Network layer: IPv4 IPv6
- Data link layer: ARP
- Physical layer: Ethernet

| S-GW | S5/S8 (GTP) | | P-GW |
|---|---|---|---|
| Transport | | | Transport |
| IPv4/IPv6 | | | IPv4/IPv6 |
| GTP-CU | | | GTP-CU |
| UDP | | | UDP |
| IPv4/IPv6 | | | IPv4/IPv6 |
| L1/L2 | | | L1/L2 |
| 335327 | | | |

| S-GW | S5/S8 (PMIP) | | P-GW |
|---|---|---|---|
| Transport | | | Transport |
| IPv4/IPv6 | | | IPv4/IPv6 |
| GRE or IP-in-IP | | | GRE or IP-in-IP |
| UDP | | | UDP |
| IPv4/IPv6 | | | IPv4/IPv6 |
| L1/L2 | | | L1/L2 |

**S6b interface:** This reference point, between a control node (Gateway) and a 3GPP AAA server/proxy, is used for mobility-related authentication. It can also be used to retrieve and request mobility related parameters and to retrieve static QoS profiles for UE (for non-3GPP access) in case dynamic PCC is not supported. From Release 12.2 onwards, the S6b interface has been enhanced to pass the IPv6 address assigned by the UE (IPv6 ID of IPv6 interface) to the AAA server. The S6b interface also supports Framed-IPv6 Pool, Framed IP Pool and AVP-based IP assignment of served party IP addresses. With this support, based on the group name and APN name received from the AAA server, the selection of a particular IP group from the configuration is made to assign the IP address.

The S6b interface at the Gateway or GGSN can be manually disabled to stop all message traffic to 3GPP AAA during overload conditions. When the interface is disabled, the system uses locally configured APN-specific parameters, including: Framed-Pool, Framed-IPv6-Pool, Idle-Timeout, Charging-Gateway-Function-Host, Server-Name (P-CSCF FQDN). This manual method is used when the HSS/3GPPAAA is under overload conditions to allow the application to recover and mitigate the impact on subscribers.

As of Release 12.3, IPv6 address notification via the Authorisation Authentication Request (AAR) to the S6b interface is no longer a pre-determined function. It is now configurable through the CLI.

Another option in the S6b interface support is the new S6b retry and continuation functionality that creates an automatic trigger on the GGSN and the control node (Gateway) to use the locally configured APN profile upon receiving any uniquely defined diameter error code on the S6b interface for an Authorisation-Authentication-Request (AA-R) only. This procedure would be used in cases where a protocol error code, transient or permanent, is returned from the primary and secondary AAA to the GGSN or control node (Gateway). In the case of the retry and continue functionality, the control node (Gateway) must query from the DNS server if it is configured in APN. S6b fault handling continues with the data call. This behaviour only applies to the aaa-custom15 diameter dictionary, i.e. neighbourhood dictionary.

StarOS Version 17 and later, the control node (Gateway) supports the reception of "restoration priority flag" AVP from the AAA server via the S6b interface to distinguish between VoLTE-enabled IMSPDN connections and non-VoLTE-enabled IMSPDN connections. KPIs are also provided on an AVP basis.

Important: The S6b interface can be deactivated via the CLlencas or a long-term AAA interrupt Supported protocols:
- Transport Layer: TCP,SCTP
- Network layer: IPv4 IPv6
- Data link layer: ARP
- Physical layer: Ethernet

| P-GW | S6b | | AAA |
|---|---|---|---|
| Diameter | | | Diameter |
| SCTP/TCP | | | SCTP/TCP |
| IPv4/IPv6 | | | IPv4/IPv6 |
| L1/L2 | | | L1/L2 |

**SGi interface:** This reference point provides connectivity between the control node (Gateway) and a packet data network (3GPP TS 23.401). This interface can provide access to a variety of network types, including an external public or private PDN and/or an internal IMS service provision network.

Supported protocols:
- Transport Layer: TCP, UDP
- Network layer: IPv4 IPv6
- Data link layer: ARP
- Physical layer: Ethernet

| P-GW | SGi | | Packet NW |
|---|---|---|---|
| Transport | | | Transport |
| IPv4/IPv6 | | | IPv4/IPv6 |
| L1/L2 | | | L1/L2 |

**Gx interface:** This signalling interface supports the transfer of policy control and charging rules information (QoS) between the Policy and Charging Enforcement Function (PCEF) at the control node (Gateway) and a Policy and Charging Rules Function (PCRF) server (3GPP TS 23.401).

Supported protocols:
- Transport Layer: TCP, SCTP
- Network layer: IPv4 IPv6
- Data link layer: ARP
- Ethernet Physical Layer.

| P-GW | Gx | | PCRF |
|---|---|---|---|
| Diameter | | | Diameter |
| SCTP/TCP | | | SCTP/TCP |
| IPv4/IPv6 | | | IPv4/IPv6 |
| L1/L2 | | | L1/L2 |

**Gy interface:** The Gy reference interface enables online accounting functions on the control node (Gateway) in accordance with the 3GPP Release 8 and Release 9 specifications

Supported protocols:
- Transport Layer: TCP, SCTP
- Network layer: IPv4 IPv6
- Data link layer: ARP
- Physical layer: Ethernet

**Gz Interface:** The Gz reference interface enables offline accounting functions on the control node (Gateway). The control node (Gateway) collects charging information for each UE mobile subscriber pertaining to the use of the radio network.

Supported protocols:
- Transport Layer: TCP
- Network layer: IPv4 IPv6
- Data link layer: ARP
- Physical layer: Ethernet

| P-GW | Gz | | OCFS |
|---|---|---|---|
| GTPP | | | GTPP |
| TCP | | | TCP |
| IPv4/IPv6 | | | IPv4/IPv6 |
| L1/L2 | | | L1/L2 |

**Gn/Gp interface:** This reference point provides tunnelling and management between the Gateway and the SGSN during handovers between EPS and 3GPP 2G and/or 3G (3GPP TS 29.060) networks.

Supported protocols:
- Transport Layer: UDP, TCP
- Tunnelling: GTP: GTP-C (signalling channel)
- Network layer: IPv4 IPv6
- Data link layer: ARP
- Physical layer: Ethernet

| P-GW | Gn/Gp | | Gn/Gp SGSN |
|---|---|---|---|
| Transport | | | Transport |
| IPv4/IPv6 | | | IPv4/IPv6 |
| GTP-C | | | GTP-C |
| UDP | | | UDP |
| IPv4/IPv6 | | | IPv4/IPv6 |
| L1/L2 | | | L1/L2 |

**RF interface:** The RF reference interface enables offline accounting functions on the control node (Gateway) in accordance with the 3GPP Releases and Release9 specifications. The control node (Gateway) collects charging information for each UE mobile subscriber pertaining to the use of the radio network.

Supported protocols:
- Transport Layer: TCP
- Network layer: IPv4 IPv6
- Data link layer: ARP
- Physical layer: Ethernet

**Gy interface:** The Gy reference interface enables online accounting functions on the control node (Gateway) in accordance with 3GPP Release 8 and Release 9 specifications.

Supported protocols:
- Transport Layer: TCP
- Network layer: IPv4 IPv6
- Data link layer: ARP
- Physical layer: Ethernet

**THE MULTIPLAY COMMUNICATION SYSTEM** for synchronous and coincident transmission of voice, data, video and radio frequency (multiplay) for mobile telephony over a fibre optic access network called GPON (Gigabit Passive Optical Network) FTTH (Fibre-To-The-Home) or FTTx (fibre to the block), using an electrical to optical converter that channels the radio frequency signal through the fibre to a Metrocell (FTTx Block) or a Femtocell (FTTH Home) with a single modem on the client side and system compatibility and remote access control management software.

FTTH and FTTx broadband technologies are part of the so-called Next Generation Networks (NGN), which provide a framework in which convergence of applications can take place.

The elements that make up the equipment of this procedure, which provides the telecommunications operator with a single ONT client-side modem to supply voice, video data + mobile connection, are as follows:
- An electronic wideband bidirectional radio frequency transmission/reception equipment suitable for LTE / LTE-A / 3G / 4G / 5G frequencies powered by direct current with irradiation capacity in frequencies >1GHZ susceptible to modification because they are constituted by an individual data bus and whose dimensions are no larger than 150x30x60 mm with a low power consumption (2 watts approx.). each device has its own low power 4G/LTE5G radio signal electromagnetic radiation emission point located in each ONT terminal of each GPON residential customer/user, providing distributed radiation (Figure 7) in such a way that it transforms fixed residential FTTH networks into LTE mobile networks, avoiding radio shadow zones and providing each user with maximum constant transmission speed (100Mbps or higher) and minimum delay (<2msc) (Figure 8). Achieving its machine learning (Al) processor to improve usage time by reducing network delay by up to 10 milliseconds. The equipment interacts with the optical network towards the node in FTTH topology and GPON technology according to ITU T 984 and incorporates the specific radio interface with its two logical outputs S1 MME for signalling and S1 U for mobile traffic that impacts on the mobile network in a transparent way.
- A vertical antenna with omni-directional radiation pattern suitable for LTE / LTE-A / 3G / 4G / 5G spectral frequencies located on the client-side GPON modem.
- A software like GATEWAY with artificial intelligence for system compatibility management and remote access control management for the equipment through which the logical connection is established from the communications node where the OLT equipment is located that transmits the signal corresponding to the mobile network independently of the GPON technology of the fixed network, creating on the client side, ONT, a point of radio irradiation LTE / LTE-A / 3G / 4G / 5G and at the same time operating the fixed network GPON optical transport, without modification or interference in the services that leads to the client (Multiplay: voice, data, video, radio frequency) is located in the exchange and accesses by remote control to all parameters of each electronic transmission equipment of the LTE mobile network, without interference in the services of the fixed GPON network (triple play), which interacts with the GPON network and the mobile network, the software allows transferring data from the LTE radio interface using a virtual GPON container called T-CONT transparently and reaching the mobile network

The procedure is carried out via the modem over four connections or interfaces:
- Optical Interface to the node via the Optical FTTH/FTTx GPON network. ITU G 984.X Standard with the optical network terminal equipment at the OLT node (1), transporting the data packet from the GPON modem (2) to the telecommunications node (3) and from there to the fixed and mobile network.
- Electrical interface at the physical customer. IEEE 802.11ax ETHERNET Standard Converts FTTH/FTTx GPON optical traffic to electrical traffic in the form of an ETHERNET packet with two equal outputs: wired and wireless (WiFi). Obtains electrical data output from a standardised optical frame with two identical IEEE 802 outputs over two different transmission media: UTP wired, mobile and wireless (WiFi).
- Electrical interface at the wireless client. IEEE 802.11ax ETHERNET standard Converts FTTH/FTTx GPON optical traffic to electrical traffic in the form of an ETHERNET packet with two equal outputs: wired and wireless (WiFi) Obtains electrical data output from a standardised optical frame with two identical IEEE 802 outputs over two different transmission media: UTP wired, mobile and wireless (WiFi).
- LTE / LTE-A / 3G / 4G / 5G electrical interface, for mobile network, converts FTTH GPON optical traffic to radio traffic in the form of LTE / LTE-A / 3G / 4G / 5G for mobile telephony. Output for LTE / LTE-A / 3G / 4G / 5G mobile network from an optical modem with ETHERNET interface.

Advanced microprocessors for LTE / LTE-A / 3G / 4G / 5G have been used for the configuration of the equipment claimed in this Memorandum of Procedure and software has been developed to support the GPON FTTH fixed optical network systems with the mobile network that remotely accesses (remote control) all parameters of the mobile transmission equipment operating independently of the GPON FTTH / FTTx system.

For this purpose, a low-power (2 to 20W) broadband radio frequency stage has been generated on a direct current with irradiation capacity at frequencies exceeding 3 Ghz that can be modified by being made up of an individual or independent data bus (computing device through which data is transported, information transmission channel within the computer that communicates the components of said system with the microprocessor) that transmits over an Ethernet container to subsequently be connected internally to the GPON modem in accordance with ITU-G 984 standards.2, a T-CON Duplex (Full-duplex) channel or network that sends data in both directions at the same time in IPV6 format (the transition between IPv6 providers is transparent to end-users with the renumbering mechanism) whether sending or receiving voice (VoIP), data (IP) or video (MPG4) information from the node.

In this way, the referenced procedure can create as many LTE / LTE-A / 3G / 4G / 5G mobile network transmission points with high-speed data services (100 Mbps) and minimum delay (<2msc) over a fixed fibre optic network, as many as there are customers/users, resulting in high quality convergence of fixed and mobile optical network transmissions with a single client-side modem.

In infrastructure mode, each computer station (abbreviated EST) is connected to an access point via a wireless link. The configuration consisting of the access point and the stations located within the coverage area is called the basic service set or BSS. These form a cell. Each BSS is identified by a BSSID (BSS identifier) which is a 6-byte (48-bit) identifier. In infrastructure mode the BSSID corresponds to the access point of the MAC address.
It is possible to link several access points together (or more precisely, several BSSs) with a connection called a distribution system (or DS) to form an extended service set or ESS. The distribution system can also be a wired network, a cable between two access points or even a wireless network.

An ESS is identified by an ESSID (Extended Service Set Identifier), which is a 32-character identifier in ASCII format that acts as its name in the network. The ESSID, often abbreviated SSID, shows the name of the network and in a way represents a first level security measure since a station must know the SSID to connect to the extended network.
When a roaming user goes from one BSS to another while moving within the ESS, the wireless network adapter of the roaming user's computer may switch access points, depending on the quality of the signal received from different access points. The access points communicate with each other via a distribution system in order to exchange station information and, if necessary, to transmit data from mobile stations. This feature that allows stations to move "transparently" from one access point to another is called roaming.

**Communication with an access point:** When a station joins a cell, it sends a polling request to each channel. This request contains the ESSID that the cell is configured to use and also the volume of traffic that your wireless adapter can support. If no ESSID is set, the station listens to the network to find an SSID.

Each access point transmits a signal at regular intervals (approximately ten times per second). This signal, which is called signalling, provides information on its BSSID, its characteristics and its ESSID, if applicable. The ESSID is automatically transmitted by default, but it is recommended that this option be disabled if possible. When a polling request is received, the access point verifies the ESSID and the request for the volume of traffic found in the signalling. If the given ESSID matches that of the access point, the access point sends a response with synchronisation data and information about its traffic load. Thus, the station receiving the reply can check the quality of the signal sent by the access point to determine how far away it is. Generally speaking, the closer an access point is, the greater its data transfer capacity.

Therefore, a station within the range of many access points (having the same SSID) can choose the point that offers the best ratio between traffic load capacity and current traffic load. If the station is within range of several access points, it will choose which one to connect to.

### Ad hoc mode

In ad hoc mode, wireless client computers are connected together to form a peer-to-peer network, i.e. a network in which each computer acts as both a client and an access point simultaneously.
The configuration formed by the basic independent basic service set stations or IBSS. An IBSS is a wireless network that has at least two stations and does not use any access points. Therefore, IBSS creates a temporary network that allows people in the same room to exchange data. It identifies itself through an SSID in the same way as an ESS does in infrastructure mode.

In an ad hoc network, the range of the independent BSS is determined by the range of each station. This means that if two stations in the network are out of range of each other, they will not be able to communicate, even if they can "see" other stations. Unlike infrastructure mode, ad hoc mode does not have a distribution system that can send data frames from one station to another. So, by definition, an IBSS is a restricted wireless network.

The Wi-Fi Alliance designates this standard as Wi-Fi 6, for easy reference. (Wi-Fi 5 is 802.11ac), as a technology upgrade offers benefits that greatly strengthen the technology by dramatically boosting capacity and cutting delay. Wi-Fi 6 offers four times the system capacity, also quadruples simultaneous access and reduces transmission latency by up to 60% compared to Wi-Fi 5. This defines fast and responsive Wi-Fi. This is the ideal Wi-Fi for users who require high bandwidth and an exceptional user experience.

Wi-Fi 6, the sixth generation of the Wi-Fi standard, features key 5G technologies such as orthogonal frequency division multiple access (OFDMA), multi-user MIMO with uplink (MU-MIMO) and higher order 1,024-QAM coding. Comparatively, Wi-Fi 6 quadruples bandwidth and the number of simultaneous users compared to Wi-Fi 5, reducing average network latency from 30 milliseconds to 20 milliseconds, according to experts from the 802.11 standards working groups.

Wi-Fi 6 products integrate with 5G technologies for the best business performance and highest speed.

Wi-Fi 6 offers high upload and download speeds for a large number of users, a high quality experience with 4 times more bandwidth and concurrent services compared to Wi-Fi 5.

According to tests by Tolly, a third-party testing organisation, the single client throughput of a WIFI 6 access point (AP) reaches 3 Gbit/s, which is among the highest rates in the industry. This product series specialises in high-density scenarios and 8K video, such as football stadiums, cinema theatres, conference rooms and classrooms.

## Claims

1. Node 1.- An IoT and AI enabled distributed intermediate control node (Gateway) integrated in a multiplay telecommunication system applied to small cell in 4 and 5G mobile networks **characterised in that** it incorporates:
- AT LEAST ONE DISTRIBUTED INTRMEDIATE CONTROL NODE (GATEWAY) that manages the interconnection, mobility and coordination of the different telecommunications operators with the nodes of the multiplay networks and provides the network functions necessary to supply the set of multiplay networks with the desired functional characteristics at high speed and,
- A MULTIPLAY TELECOMMUNICATION SYSTEM for synchronous/non-synchronous and coincident transmission of voice, data, video and radio frequency for mobile telephony over a fibre optic network **characterised in that** over a GPON (Gigabit Passive Optical Network) FTTH (Fibre-To-The-Home) that transmits voice, data and video, the signal is also incorporated by means of a converter that transforms the mobile radiofrequency signal into an optical signal, the conduction of said signal through the fibre that reaches a single client/user side modem that includes system compatibility, artificial intelligence and remote access control management software where it is transformed back into a radio signal, transforming the optical signal into mobile radio signal through a femtocell (in the case of FTTH residential customer and through a metrocell in the case of FTTx street customer) obtaining the output for mobile network starting from an optical modem with 4 interfaces that supports simultaneously digital Ethernet traffic and mobile broadcast radio signals, simultaneously, with physical data output in wired and wireless form at the same time, allows independent management of mobile telephony services, Ethernet services (voice, data, video) of the GPON network, acting with 5G mobile network frequency above 3 GHz and with WIFI 6 capability, according to IEEE, 802.11ax (loT) and with artificial intelligence (Al) processing software.
The system is implemented by means of a distributed intermediate control node (Gateway) and a client-side receiver/transmitter modem equipment whose configuration and functionalities are as follows:
- Distributed intermediate control code (Gateway):
• Support for mobility between 3GPP access systems and non-3GPP access systems. This is sometimes referred to as the SAE Anchor function. Very important to ensure compatibility between equipment
• Application of operator policies (permit and tariff enforcement)
• Per-user packet filtering (Deep Packet Inspection) for traffic discrimination including security filters.
• Support and load balancing between units (small cell) of the multiplay networks interconnected at the control node (Gateway)
• Lawful interception accessible from the control node (Gateway) and not from the nodes (small cell) of multiplay networks.
• UE IP address assignment and VLAN configuration for interaction between the operator's network and the nodes (small cell) of the multiplay networks linked to the control node (Gateway)
• Packet selection to prevent IP network intrusions
• Downlink transport level packet marking (traffic discrimination and associated software);
• Application of downlink rate based on Aggregate Maximum Bit Rate (AMBR); i.e. dynamic management of available bandwidth.
• Configuration interface between the operator's nodes (the core of its network), the control node (Gateway) and the communication structure between the control node (Gateway) and nodes (small cell) of the multiplay networks through dedicated software integrated and embedded in the design of the small control node (Gateway). From the Gateway control node, communications between each node (small cell) of the multiplay networks and the Gateway node will be configured, as well as the exchange of communications (X2) between nodes (small cell) of the multiplay networks through the Gateway control node.
The following are additional control node (Gateway) functions when non-3GPP access (eHRPD) is supported:
• control node (Gateway) includes the Local Mobility Anchor (LMA) function, if PMIP-based S5 or S8 is used.
• control node (Gateway) includes the function of a DSMIPv6 Home Agent, if S2c is used.
- Receiver/transmitter client-side modem equipment
• A bidirectional wideband radio frequency transmission/reception electronic equipment suitable for frequencies from, LTE / LTE-A / 3G / 4G/ 5G DC powered with the ability to radiate at frequencies ranging from 600 Mhz to over 3Ghz incorporating the LTE / LTE-A / 3G / 4G/ 5G radio interface with its two logic outputs S1 MME signalling and S1 U mobile traffic which impacts the mobile network in a transparent manner.
• A vertical antenna with omni-directional radiation pattern for LTE / LTE-A / 3G / 4G / 5G spectral frequencies
• A specific system compatibility, artificial intelligence and remote access control management software that transparently transfers data from the LTE / LTE-A / 3G / 4G / 5G radio interface using a virtual GPON container called TCONT and reaches the mobile network CORE.
• WIFI 6, according to IEEE, 802.11ax (IoT) and,
• Artificial intelligence (AI) processing software

2. A distributed IoT and AI enabled intermediate control node (Gateway) integrated in a multiplay telecommunication system applied to small cell in 4 and 5G mobile networks characterised according to the first claim in that the system procedure of the intermediate control node is realised by 9 interfaces:
- **S2b interface:** The S2b interface reference point defined between the unreliable non-3GPP ePDG (Evolved Packet Data Gateway) and the control node (Gateway) uses PMIPv6 (Proxy Mobile IP version 6) to provide access to the EPC. GTPv2-C is the signalling protocol used in S2b. The S2b interface is based on 3GPP TS 29.274.
- **S6b interface:** This reference point, between a control node (Gateway) and a 3GPP AAA server/proxy, is used for mobility-related authentication.
- **SGi interface:** This reference point provides connectivity between the control node (Gateway) and a packet data network (3GPP TS 23.401). This interface can provide access to a variety of network types, including an external public or private PDN and/or an internal IMS service provision network.
- **Gx interface:** This signalling interface supports the transfer of policy control and charging rule (QoS) information between the Policy and Charging Enforcement Function (PCEF) at the control node (Gateway) and a Policy and Charging Rule Function (PCRF) server (3GPP TS 23.401).
- **Gy interface:** The Gy reference interface enables online accounting functions at the Gateway in accordance with the 3GPP Release 8 and Release 9 specifications.
- **Gz Interface:** The Gz reference interface enables offline accounting functions on the control node (Gateway). The control node (Gateway) collects charging information for each UE mobile subscriber pertaining to the use of the radio network.
- **Gn/Gp interface:** This reference point provides tunnelling and management between the Gateway and the SGSN during handovers between EPS and 3GPP 2G and/or 3G (3GPP TS 29.060) networks.
- **RF interface:** The RF reference interface enables offline accounting functions on the control node (Gateway) in accordance with the 3GPP Release8 and Release9 specifications. The control node (Gateway) collects charging information for each UE mobile subscriber pertaining to the use of the radio network.
- **Gy interface:** The Gy reference interface enables online accounting functions at the Gateway in accordance with the 3GPP Release8 and Release9 specifications.

3. A distributed intermediate control node (Gateway) with IoT and AI capability integrated in a multiplay telecommunication system applied to small cell in 4 and 5G mobile networks characterised, according to the first claim, because the multiplay communication system of the client-side receiver/transmitter modem equipment is performed by four connections or interfaces through the modem:
- **Optical Interface:** to the node via the Optical FTTH GPON network, transporting the data packet from the GPON LTE / LTE-A / 3G / 4G / 5G modem to the telecommunication node and from there to the fixed and mobile network.
- **Physical electrical interface:** converts, at the client side, FTTH GPON optical traffic to electrical traffic in the form of an ETHERNET packet with three equal outputs: wired, mobile and IEEE 802.11ax wireless.
- **Electrical wireless interface:** at the client, converts FTTH GPON optical traffic to electrical traffic in the form of an ETHERNET packet with three equal outputs: wired, mobile and IEEE 802.11ax wireless.
- **Electrical interface:** LTE / LTE-A / 3G / 4G / 5G, for mobile network, converts FTTH GPON optical traffic to radio traffic in the form of LTE / LTE-A / 3G / 4G / 5G for mobile phone. It outputs LTE / LTE-A / 3G / 4G / 5G mobile network from an optical modem with ETHERNET interface, increases wireless signal quality while artificial intelligence management software achieves machine learning to improve time of use by reducing network delay by up to 10 milliseconds and increases coverage area by 20 percent.

4. A distributed IoT and AI enabled intermediate control node (Gateway) integrated in a multiplay telecommunication system applied to small cell in 4 and 5G mobile networks characterised, according to the first claim, in that the packet data network (PDN) is a critical network function for the 5G mobile core network, known as the evolved packet core (EPC) and necessary to group several small cell (multiplay networks) and manage them together. The control node acts as an interface between the 3GPP2 Long Term Evolution-System Architecture Evolution (LTE-SAE) network and other packet data networks, such as the Internet, SIP-based IP Multimedia Subsystem (IMS) networks and high-speed evolved networks. Wireless packet data networks (eHRPD).

5. A distributed IoT and AI capable intermediate control node (Gateway) integrated in a multiplay telecommunication system applied to small cell in 4 and 5G mobile networks distributed with IoT and AI capability integrated in a multiplay telecommunication system characterised, according to the first claim because the node terminating the interface receiving the signal from the intermediate mobile access nodes (small cell) over a GPON access network as transport network and to the optical line terminal (OLT node side) of the output port (UP LINK) of the OLT receives this signal and routes and/or transforms it into the mobile network protocol according to 3GPP in SI/S2 or X1/X2 interface or according to 4G or 5G mobile networks

6. An IoT and AI enabled distributed intermediate control node (Gateway) integrated in a multiplay telecommunication system applied to small cell in 4 and 5G mobile networks characterised, according to the first claim, in that the node provides connectivity to User Equipment (UE) to external packet data networks by being the exit and entry point of traffic for the (UE). A UE can simultaneously have connectivity to more than one control node (Gateway) to access multiple packet data nodes (PDNs). This proposed control node simultaneously performs policy enforcement, packet filtering for each user, charging support, lawful interception and packet detection, as well as acting as an anchor for mobility between 3GPP and non-3GPP technologies, such as WiMAX and 3GPP2 (CDMA 1X and EvDO).

7. An IoT and AI enabled distributed intermediate control node (Gateway) integrated in a multiplay telecommunication system applied to small cell in 4 and 5G mobile networks characterised according to the first claim because the artificial intelligence management software for the LTE / LTE-A / 3G / 4G / 5G mobile network installed over the GPON fixed network makes the GPON fixed optical network installations compatible with the LTE / LTE-A / 3G / 4G / 5G mobile networks, without interference to the fixed GPON network services (multiplay) and transfers data from the LTE / LTE-A / 3G / 4G / 5G radio interface using a virtual GPON container called T-CONT transparently and reaches the mobile network.

8. Distributed IoT and AI capable intermediate control node (Gateway) integrated in a multiplay telecommunication system applied to small cell in 4 and 5G mobile networks characterised, according to the first claim because each electronic equipment has its own electromagnetic radiation emission point of low power LTE / LTE-A / 3G / 4G/ 5G radio signals located in each ONT terminal of each GPON residential customer/user providing a distributed irradiation ( Fig. 7) in such a way that it transforms residential fixed FTTH networks into LTE / LTE-A / 3G / 4G / 5G mobile networks, reaching the radio shadow zones and providing each user with maximum constant speed of transmissions (100Mbps or higher), minimum delay (<2msc) and reduction of total delay in the Access network up to the node prior to exit to the Transport network, up to 10 milliseconds

9. Distributed IoT and AI capable intermediate control node (Gateway) integrated in a multiplay telecommunication system applied to small cell in 4 and 5G mobile networks characterised, according to the first claim, because the low power electromagnetic radiation distributed in "N" points by means of the proposed equipment suppresses and/or complements the installations of high power concentrated irradiation antennas of the base stations of telecommunications operators (Figure 6)

10. An IoT and AI enabled distributed intermediate control node (Gateway) integrated in a multiplay telecommunication system applied to small cell in 4 and 5G mobile networks characterised, according to the first claim, because the proposed smart radio technology increases the speed of decision making and action by the systems dedicated to Industry 4.0 and also allows mobile control of devices -without physical data network connection- extending the coverage area by 20 percent. Since fewer APs are required, the cost of deployment is reduced by 20 per cent.

11. An IoT and AI enabled distributed intermediate control node (Gateway) integrated in a multiplay telecommunication system applied to small cell in 4 and 5G mobile networks characterised, according to the first claim, in that provides data lossless roaming technologies between access points to ensure packet lossless data transmission even when in automated guided vehicles (AGVs) between large campuses by combining Wi-Fi 6 with loT.
